# EUROPÄISCHE PATENTSCHRIFT

(11) **EP 0 745 831 B1**
(45) Veröffentlichungstag und Bekanntmachung des Hinweises auf die Patenterteilung: **25.06.2003**
(21) Anmeldenummer: 96106540.6
(22) Anmeldetag: 25.04.1996
(51) Int. Cl.: G01B 11/16

(54) **Verfahren und Vorrichtung zur Vergrösserung des Messbereichs von Speckle-Messsystemen bei Dehnungsmessungen**
Procedure and device to increase the measuring range in speckle-measuring systems with stretch measurements
Procédé et dispositif pour agrandir la plage de mesure de systèmes à speckle dans les mesures de dilatation

(30) Priorität: 02.06.1995 DE 19520371
(43) Veröffentlichungstag der Anmeldung: 04.12.1996
(73) Patentinhaber: Ettemeyer AG, 89231 Neu-Ulm (DE)
(72) Erfinder: Ettemeyer, Andreas, Dr.-Ing., 89231 Neu-Ulm (DE)
(74) Vertreter: Alber, Norbert, Dipl.-Ing.

(56) Entgegenhaltungen:
- DE-A- 4 039 972
- US-A- 4 605 857
- "Rechnergesteurtes Laser-Dilatometer" LASER AND ELEKTRO OPTIK, Bd. 13, Nr. 2, Juni 1981, STUTTGART, Seite 74 XP002058335

## Beschreibung

Die Erfindung betrifft ein Verfahren und eine Vorrichtung zur Vergrößerung des Meßbereichs von Speckle-Meßsystemen bei Dehnungsmessungen an einer Probe in einer Prüfmaschine.

Durch den Einsatz von Speckle-Meßverfahren können Verschiebungen und Dehnungen von Probenoberflächen in Prüfmaschinen flächenhaft, markenfrei und berührungslos mit einer hohen Meßempfindlichkeit gemessen werden. Meßbar sind die ein- bis dreidimensionalen Verschiebungskomponenten der Probe, wobei größere Bewegungsamplituden durch Serienmessung mehrerer kleiner Schritte und Aufaddition der Meßergebnisse erfaßt werden können.

Die US-A-4 605 857, die den nächstkommenden Stand der Technik darstellt, offenbart ein Dehnungs-Meßverfahren mit allen Merkmalen des Oberbegriffs der nebengeordneten Ansprüche 1 und 2 sowie 4 und 7. Dabei wird die Verschiebung einer auf der Probe aufgebrachten optischen Markierung infolge einer Dehnung der Probe bei Belastung von einem Sensor, der an einer von einem Stellmotor angetriebenen Gewindespindel befestigt ist, erfasst, infolgedessen der Stellmotor dazu veranlasst wird den Sensor in Belastungsrichtung nachzuführen. Dieses Verfahren ist jedoch nachteilig, da es einen aufwendigen Regelkreis verwendet, wodurch bei einer ruckartigen Verschiebung der Markierung der Sensor nur verzögert nachgeführt wird.

Die DE-A-4 039 972 zeigt ein Verfahren zur Erfassung der Oberflächenverformung eines Objektes mittels elektronischer Speckle-Interferometrie.

Bei dem Einsatz des Speckle-Meßverfahrens bei Materialprüfmaschinen besteht jedoch das Problem, daß durch die Dehnung der Probe insgesamt sowie durch die Nachgiebigkeit der Einspannung die Probenoberfläche im Meßfeld sich deutlich mehr verschieben kann als die eigentliche Dehnung ausmacht. Die Probe bewegt sich im Meßfeld häufig wesentlich stärker als ihre Ausdehnung beträgt, da sie sich über der ganzen Länge dehnt, jedoch nur in einem Teilbereich gemessen wird.

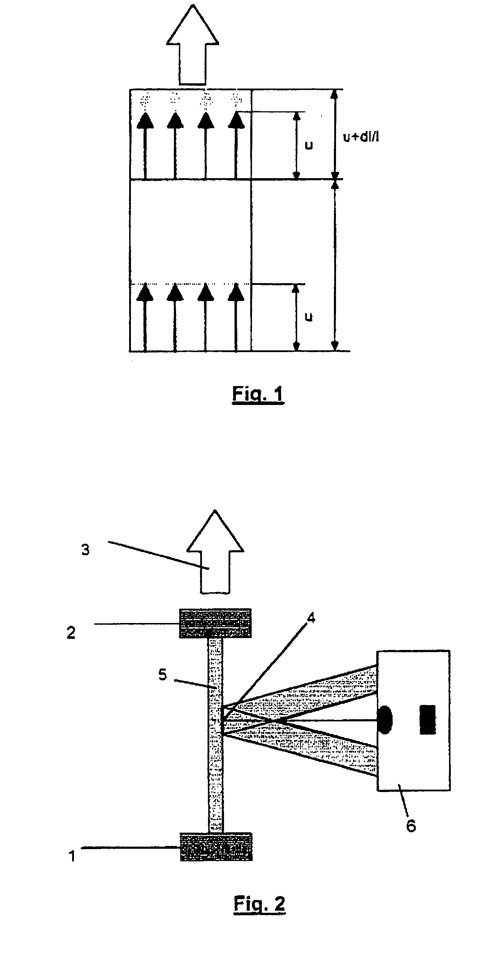

Figur 1 erläutert schematisiert dieses Problem, das durch Überlagerung von Dehnung (dl/l) und stärkere Bewegung (u) auftritt. Figur 2 zeigt ein Beispiel für einen eindimensional messenden Sensor, der die Bewegungen der Probe in Belastungsrichtung mißt. Dabei ist eine Probe 5 zwischen einer unteren Traverse 1 und einer oberen Traverse 2 eingespannt. Die untere Traverse 1 und die obere Traverse 2 gehören zu einer Belastungseinrichtung einer nicht dargestellten Prüfmaschine. Mit dem Bezugszeichen 4 ist das Meßfeld bezeichnet, auf das ein Speckle-Sensor 6 gerichtet ist. Die Belastungsrichtung ist durch einen Pfeil 3 angegeben. Ersichtlich kommt es bei einer Belastung der Probe 5 zu einer Verschiebung des Speckle-Musters insgesamt mit der Folge, daß durch Dekorrelationseffekte der Kontrast der Messung absinkt. Im Einzelfall kann dies dazu führen, daß der Einsatz der Speckle-Meßtechnik verhindert wird. Auf die Meßtechnik übertragen wirkt dieser Effekt so wie eine Verschlechterung des Verhältnisses zwischen Nutz-Signalen (Dehnung) und Rausch-Signalen (Starrkörperverschiebung).

Ein weiteres Problem besteht bei dem Einsatz der SpeckleMeßverfahren darin, daß sich die betrachteten Punkte der Oberfläche bei größeren Belastungsamplituden auch makroskopisch von der ursprünglichen Bildlage derart entfernen, daß eine Zuordnung nicht mehr möglich ist.

Ausgehend vom Stand der Technik ist es daher die Aufgabe der vorliegenden Erfindung, ein Verfahren zu schaffen, bei dem ein Sensor mit einfachen Mitteln unmittelbar entsprechend einer Dehnung der Probe ohne Verzögerung mitbewegbar ist.

Erfindungsgemäß wird diese Aufgabe verfahrensseitig durch die Merkmale der nebengeordneten Ansprüche 1 und 2 und vorrichtungsseitig durch die Merkmale der nebengeordneten Ansprüche 4 und 7 gelöst.

Bevorzugte Merkmale, die die Erfindung vorteilhaft weiterbilden, sind den jeweils nachgeordneten Patentansprüchen zu entnehmen.

Erfindungsgemäß wird demgemäß vorteilhaft der Starrkörperanteil der Probenbewegung durch Mitbewegen des Speckle-Sensors kompensiert, wodurch der Meßbereich des Speckle-Meßsystems wesentlich erweitert wird. In günstiger Weise wird der Speckle-Sensor in Bewegungsrichtung der Probe so nachgeführt, daß die Mitte des Meßfeldes sich bei Belastung mit Verschieben der Probe immer am selben Objektpunkt befindet. Hierdurch kommt es zu einer deutlichen Verbesserung des Signal/Rausch-Verhältnisses.

Gemäß einer bevorzugten Ausgestaltung der Erfindung wird ein Speckle-Sensor in wenigstens einer Dehnungsrichtung der Probe nachgeführt, bevorzugt jeweils ein Sensor in zwei oder drei Raumrichtungen. nachgeführt, bevorzugt jeweils ein Sensor in zwei oder drei Raumrichtungen.

Für das Mitbewegen eines Speckle-Sensors gibt es mehrere Möglichkeiten. Gemäß einer Ausbildungsform der Erfindung wird ein Speckle-Sensor durch eine mechanische Kopplung zwischen Sensorhalterung und Belastungsvorrichtung mitbewegt. Alternativ kann nach einem weiteren Ausführungsbeispiel vorgesehen sein, daß ein Sensor durch einen oder mehrere separate Antriebe unter Berücksichtigung seines jeweiligen Meßergebnisses und/oder unter Berücksichtigung eines oder mehrerer externer Signale und/oder unter Berücksichtigung der Steuerung der Prüfmaschine verfahren wird.

Jeder Speckle-Sensor ist für seine Mitbewegung bevorzugt an einem Verschiebeschlitten angeordnet, welcher nach einer weiteren Ausbildungsform der Erfindung mechanisch mit der Belastungseinrichtung entweder durch ein Gestänge mit einem Schubgelenk oder ein Zahnradgetriebe, Zahnriemen oder Seile verbunden ist. Alternativ weist der Verschiebeschlitten einen oder mehrere separate Antriebe auf, die elektronisch steuerbar sind, wobei bevorzugt für die elektronische Steuerung von dem Sensor selbst ermittelte Meßdaten oder/und von einem separaten Meßgerät ermittelte Meßdaten oder/und von der Steuerung der Prüfmaschine ermittelte Daten vorgesehen sind.

Nachfolgend wird die Erfindung unter Bezugnahme auf die beigefügten Zeichnungen näher erläutert.

Es zeigen:
- Figur 1: eine schematische Darstellung der Überlagerung von Dehnung und stärkerer Bewegung bei eindimensionaler Probenbelastung;
- Figur 2: eine schematische Darstellung eines Beispiels eines eindimensional messenden Sensors, der die Bewegung der Probe in Belastungsrichtung mißt;
- Figur 3: eine schematische Darstellung eines Ausführungsbeispiels einer erfindungsgemäßen Vorrichtung, bei der die Verschiebung des Sensors durch eine mechanische Kopplung über ein Gestänge und Schubgelenk mit der Belastungseinrichtung erfolgt;
- Figur 4: ein schematisiertes Ausführungsbeispiel für eine Vorrichtung, bei der die Verschiebung des Sensors durch eine mechanische Kupplung mittels Zahnriemen oder Seilen erfolgt;
- Figur 5: eine schematische Darstellung eines Beispiels für eine elektronische Steuerung der Sensorverschiebung, wobei der Verschiebeweg aus den von dem Sensor selbst ermittelten Meßdaten berechnet wird;
- Figur 6: eine schematische Darstellung eines Beispiels für eine elektronische Steuerung der Sensorverschiebung, wobei der Verschiebeweg aus Meßdaten eines weiteren Meßgerätes berechnet wird; und
- Figur 7: eine schematische Darstellung eines Beispiels für eine elektronische Steuerung der Sensorverschiebung, wobei der Verschiebeweg direkt aus der Steuerung der Prüfmaschine ermittelt wird.

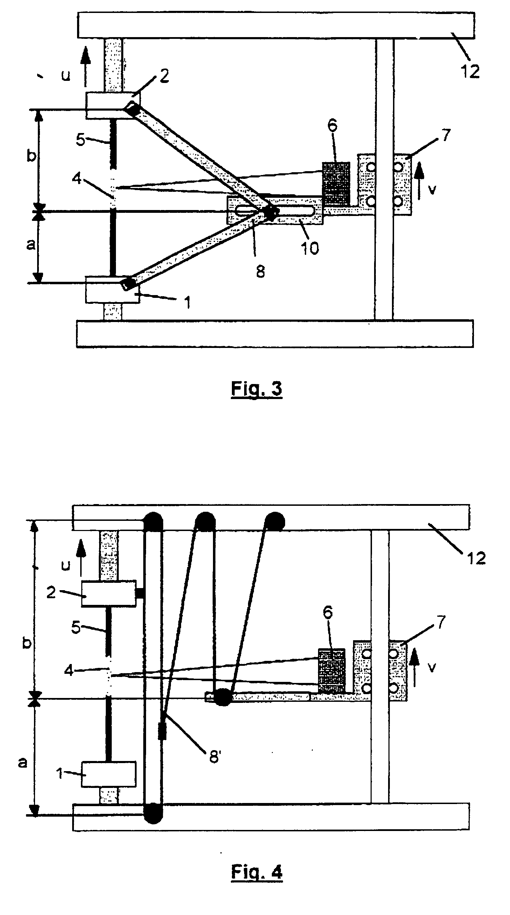

In Figur 3 ist schematisiert ein Ausführungsbeispiel einer erfindungsgemäßen Vorrichtung dargestellt, bei der die Verschiebung durch eine mechanische Kopplung mit einem Gestänge 8 und einem Schubgelenk 10 vorgesehen ist. Das Gestänge 8 besteht aus 2 gelenkig mit dem Schubgelenk 10 verbundenen Stangen, die mit ihrem anderen Ende an der oberen Traverse 2 bzw. der unteren Traverse 1 angelenkt sind. Mit der Bezugszahl 7 ist ein Verschiebeschlitten angedeutet, an dem der Speckle-Sensor 6 befestigt ist. Der Verschiebeschlitten 7 ist parallel zur Belastungsrichtung an einem Profil 11 geführt, das einen Teil der Prüfmaschine 12 bildet. Durch die getroffene Anordnung wird vorteilhaft erreicht, daß die Mitte des Meßfeldes des Sensors 6 bei der Belastung und Verschiebung der Probe 5 immer am selben Objektpunkt bleibt, weil sich das Verhältnis einer Strecke a von der unteren Traverse 1 bis zur Unterkante des Meßfeldes 4 zu einer Länge b von dem unteren Ende des Meßfeldes 4 bis zur oberen Traverse nicht ändert.

Figur 4 zeigt ein alternatives Ausführungsbeispiel einer Vorrichtung, bei der die Verschiebung des Sensors 6 an seinem Verschiebeschlitten 7 mittels Zahnriemen 8' erfolgt. Dabei erfolgt die Bewegung des Meßgerätes bzw. Sensors mit der halben Traversengeschwindigkeit.

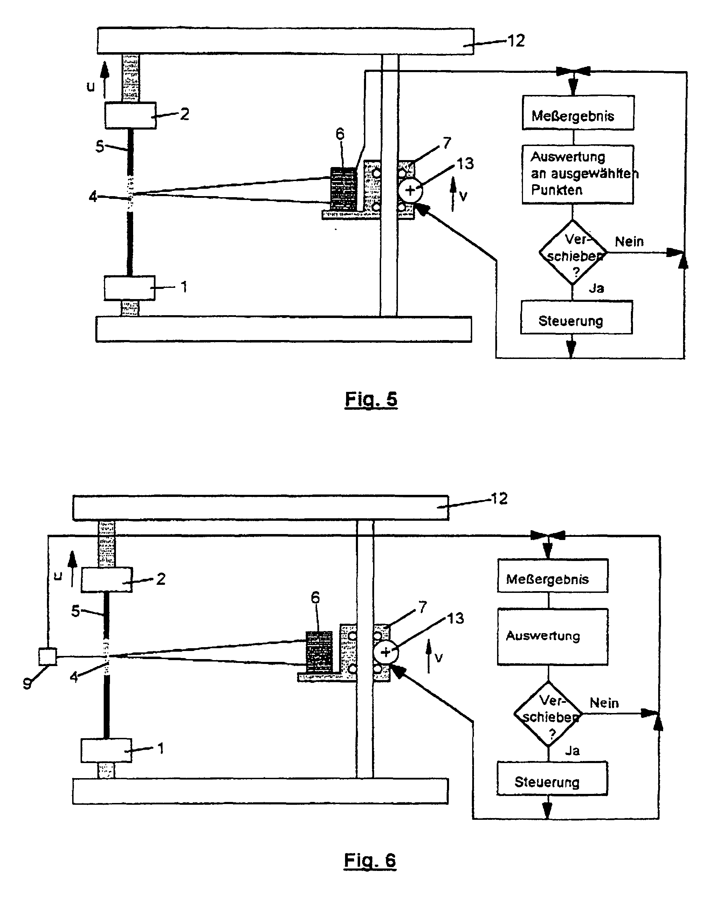

In den Figuren 5 - 7 sind verschiedene Ausführungsbeispiele für eine elektronische Steuerung des Verschiebeschlittens 7 dargestellt, der einen oder mehrere separate Antriebe 13 aufweist.

Gemäß Figur 5 erfolgt eine elektronische Steuerung des bzw. der separaten Antriebe 13 mit aus dem Sensor 6 selbst gewonnenen Meßdaten, wie sich ohne weiteres aus der schematisierten Steuerungslogik ergibt.

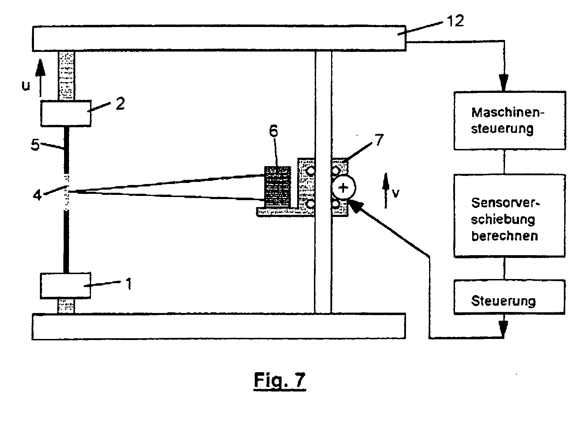

Gemäß Figur 6 ist für die Steuerung der Verschiebung des Sensors 6 ein weiteres nur punktuell messendes Maßgerät 9 vorgesehen, während in Figur 7 die von der Prüfmaschine 12 ermittelten Daten zur elektronischen Steuerung des Antriebs 13 zwecks Verschiebung des Sensors 6 mittels des Verschiebeschlittens 7 vorgesehen sind.

## Patentansprüche

1. Verfahren zur Vergrößerung des Meßbereichs von Meßsystemen bei Dehnungsmessungen an einer Probe (5) in einer Prüfmaschine (12), bei dem ein Sensor verwendet wird, die Probe (5) in der Prüfmaschine in einer Belastungseinrichtung (1, 2) belastet wird, und bei dem der Sensor bei Belastung der Probe (5) mit dieser mitbewegt wird,
**dadurch gekennzeichnet, daß**
- das Mitbewegen des Sensors durch eine mechanische Kopplung zwischen Sensor-Halterung und Belastungsvorrichtung vorgenommen wird,
- der Sensor ein Speckle-Sensor (6) ist.

2. Verfahren nach Anspruch 1,
**dadurch gekennzeichnet, daß**
der Speckle-Sensor (6) in zwei oder drei Raumrichtungen nachgeführt wird.

3. Vorrichtung zur Vergrößerung des Meßbereichs von Meßsystemen bei Dehnungsmessungen an einer Probe (5) in einer Prüfmaschine mit einem Sensor, der bei Belastung der Probe (5) in einer Belastungseinrichtung (1, 2) der Prüfmaschine mit der Probe (5) mitbewegbar ist und an einem Verschiebeschlitten (7) angeordnet ist,
**dadurch gekennzeichnet, daß**
- der Verschiebeschlitten (7) mechanisch (8, 8', 10) mit der Belastungseinrichtung (1, 2) gekoppelt ist,
- der Sensor ein Speckle-Sensor (6) ist.

4. Vorrichtung nach Anspruch 3,
**dadurch gekennzeichnet, daß**
für die Kopplung ein Gestänge (8) mit einem Schubgelenk (10) vorgesehen ist.

5. Vorrichtung nach Anspruch 3,
**dadurch gekennzeichnet, daß**
für die Kopplung Zahnradgetriebe, Zahnriemen (8') oder Seile vorgesehen sind.

## Claims

1. A method for enlargement the measuring range of the speckle measuring systems for measurements of elongation of a sample (5) in a testing machine (12) fitted with a sensor (6), wherein the sample (5) is to be loaded in the testing machine by means of a loading device (1, 2), wherein the sensor (6) used to measure the movements of the sample in the loading direction (5) will be shifted simultaneously with this,
**characterized in that**
- the speckle sensor is caused to follow-up by a mechanical coupling between the sensor holding means and the loading device,
- the sensor is a speckle sensor (6).

2. A method according to claim 1,
**characterized in that**
- the speckle sensor (6) is caused to follow-up in two or three directions in space.

3. An apparatus for enlargement the measuring range of the speckle measuring systems for measurements of elongation of a sample (5) in a testing machine (12) fitted with a sensor (6), wherein the sample (5) is to be loaded in the testing machine by means of a loading device (1, 2), wherein the sensor (6) used to measure the movements of the sample in the loading direction (5) will be shifted simultaneously with this and is arranged on a shifting slide (7)
**characterized in that**
- the shifting slide (7) is mechanistically coupled (8, 8', 10) to the loading device (1, 2)
- the sensor is a speckle sensor (6).

4. An apparatus according to claim 3,
**characterized in that**
- for coupling is provided a linkage (8) with a thrust joint (10).

5. An apparatus according to claim 3,
**characterized in that**
- for coupling are provided gear wheel drives, toothed belts (8') or cords.

## Revendications

1. Procédé visant l'élargissement du domaine de mesure des systèmes de mesure de l'allongement d'un échantillon (5) dans une machine à essai (12) comportant un capteur qui se déplace simultanément à l'échantillon lors de la sollicitation de celui-ci, l'essai de sollicitation dudit échantillon (5) ayant lieu dans un dispositif de sollicitation (1; 2),
**caractérisé en ce que**
- le balayage en temps réel du capteur se fait par couplage mécanique entre le support et le dispositif de sollicitation;
- le capteur est un capteur Speckle (6).

2. Procédé selon la revendication précédente,
**caractérisé en ce que**
le capteur se déplace dans deux ou trois directions dans l'espace.

3. Dispositif visant l'élargissement du domaine de mesure des systèmes de mesure de l'allongement d'un échantillon (5) testé dans une machine à essayer les matériaux comportant un 16 qui, lors de la sollicitation de l'échantillon dans une direction de sollicitation (1,2) de la machine à essai, se déplace simultanément à l'échantillon (5), étant monté sur une glissière (7),
**caractérisé en ce que**
- la glissière (7) est liée par couplage mécanique (8, 8' 10) au dispositif de sollicitation (1, 2);
- le capteur est un capteur Speckle (6).

4. Dispositif selon la revendication précédente,
**caractérisé en ce que**
le couplage est réalisé au moyen d'un système de leviers (8) comportant un joint de cardan (10).

5. Dispositif selon la revendication 3,
**caractérisé en ce que**
le couplage se fait au moyen d'un dispositif de transmission à roue dentée, de courroies de transmission 8', ou des cordes.
